# EUROPEAN PATENT APPLICATION

(11) **EP 0 536 736 A1**
(43) Date of publication of application: **14.04.1993**
(21) Application number: 92117177.3
(22) Date of filing: 08.10.1992
(51) Int. Cl.: F03H 1/00

(54) **Power supply and control device particularly for RF ion thrustors**

(30) Priority: 11.10.1991 IT MI912695
(71) Applicant: FIAR FABBRICA ITALIANA APPARECCHIATURE RADIOELETTRICHE S.p.A., I-20157 Milano (IT)
(72) Inventor: Cesa, Pierluigi, I-31030 Biadene (Province of Treviso) (IT); Gandini, Stefano, I-21100 Varese (IT)
(74) Representative: Modiano, Guido, Dr.-Ing.

(57) **Abstract**

Power supply and control device particularly for radiofrequency ion thrustors, comprising enabling means (54) and electric power distribution means which are electrically connected selectively to satellite batteries and to photovoltaic panels by means of voltage preregulators (76). The enabling means are connected to a satellite computer (55) to which control logic means are furthermore connected. The distribution means supply conversion means and regulation means which can be controlled by the control logic means. The conversion means and the regulation means generate supply voltages for a radiofrequency ion thrustor (77), a neutralizer (78), fuel infeed valves (79) and fuel pressure regulators for said thrustor (77) and for a radiofrequency generator (80).

## Description

The present invention relates to a power supply and control device particularly for RF or radiofrequency ion thrustors.

Research on jet thrustors for the propulsion and movement of artificial satellites in orbit is concentrating increasingly on ion-jet radiofrequency thrustors. In this field, various embodiments of a system for controlling the electric power supply required to conveniently supply power to the jet thrustor have so far been developed.

Ion thrustors have numerous different electrical requirements; furthermore, since they are used on artificial satellites in space, it is indispensable to minimize the weight of the power supply unit which meets these electrical requirements and, at the same time, provide high reliability in order to maximize the reliability of the space vehicle.

A control system has been described in European patent EP 0148857 B1 in the name of the Hughes Aircraft Company, Los Angeles, USA for a bombardment thrustor. This control system provides for an analog control which is essentially based on the power to be supplied to the thrustor with an extremely reduced digital and computerized control. Such a control system has a considerable number of problems which are fundamentally linked to the scarce possibility of controlling the emission of the jet from the thrustor. Said patent in fact fails to describe that it is necessary to provide some kind of apparatus, arranged upstream of the input power supplies to the described control system, which cuts off or activates these inputs, since said control system does not provide for any external control, i.e. control on the part of a satellite control computer, of the ignition and/or shutdown times of said thrustor.

The aim of the present invention is to eliminate or substantially reduce the problems described above by providing a power supply and control device particularly for radiofrequency ion thrustors, which provides computerized control of the thrustor without increasing the weight of said device.

Within the scope of this aim, an object of the present invention is to provide a control device which allows a very simple and quick control of the thrustor by the navigation computer without having additional circuit elements arranged on the power supply line.

Yet another object of the present invention is to provide such a control device which is highly reliable, relatively easy to manufacture and at competitive costs.

This aim, these objects and others which will become apparent hereinafter are achieved by a power supply and control device particularly for radiofrequency ion thrustors as defined in the accompanying claims.

Further characteristics and advantages of the invention will become apparent from the description of a preferred but not exclusive embodiment of a power supply and control device particularly for radiofrequency ion thrustors according to the invention, illustrated only by way of non-limitative example in the accompanying drawings, wherein:
figure 1 is a block diagram of a known controller and
figure 2 is a block diagram of a power supply and control device according to the invention;
figure 3 is a block diagram of a pumping power supply; and
figure 4 is a flowchart of the functional operating process of the control logic of the device according to the invention.

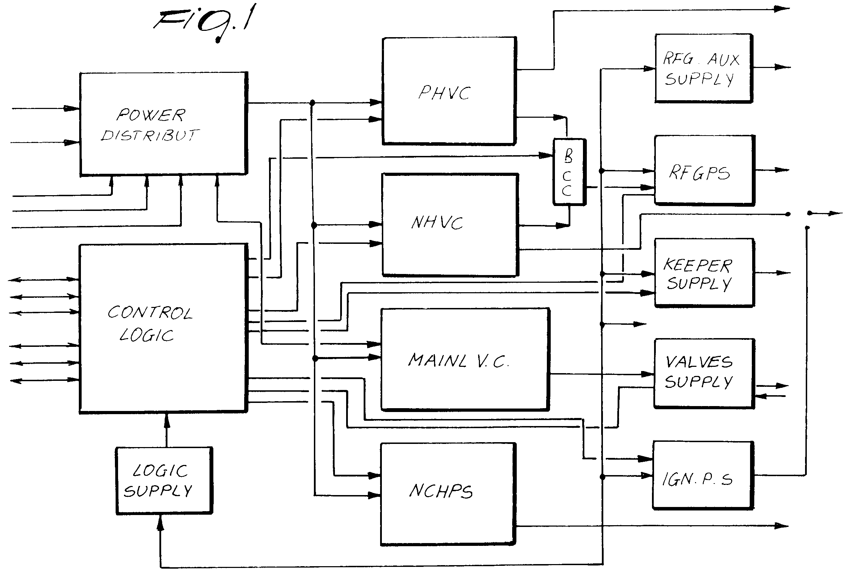

An article entitled "The Design of RITA Electric Propulsion System for Sat 2 (Artemis)", written by H. Bassener, H.-P. Berg, R. Kukies and C. Bocchiola was published in the transactions of the "AIAA/DGLR/JSASS 21st International Electric Propulsion Conference" held in Orlando, USA; said article shows, at page 5, figure 10, a general block diagram, illustrated herein in figure 1, which represents a structure of a primitive power supply control device.

The illustrated block diagram is a solution which, despite solving some of the problems described above, still had a problem linked to its excessive bulk and weight, which are still crucial for applications meant for space vehicles.

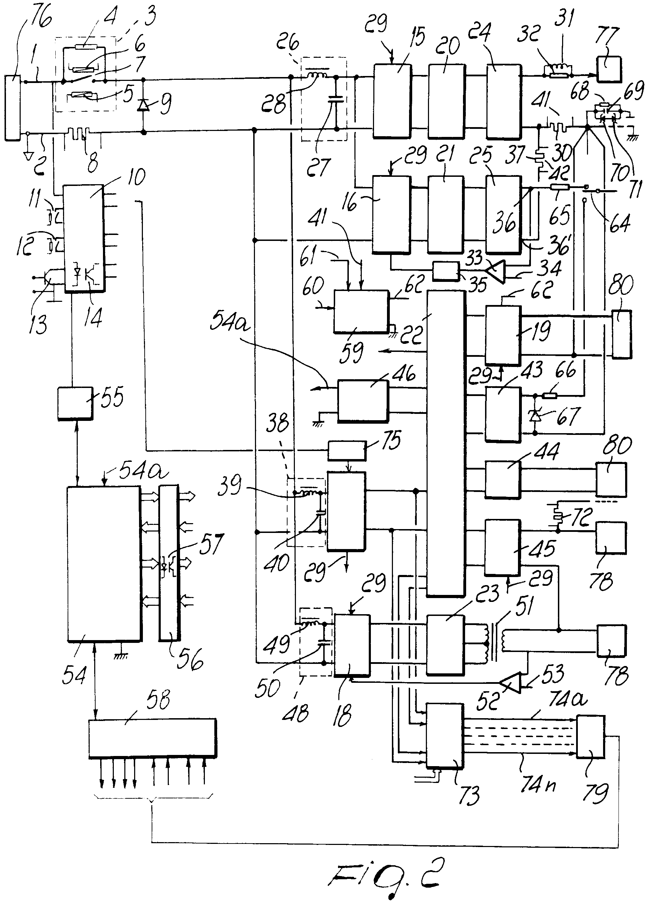

With reference to figure 2, a power supply and control device particularly for radiofrequency ion thrustors comprises enabling means and electric power distribution means which are electrically connected selectively to satellite batteries and to photovoltaic panels through voltage preregulators 76.

The enabling means are connected to a satellite computer 55 to which control logic means are connected. The distribution means supply power to conversion means and to regulation means which can be controlled by the control logic means. The conversion means and the regulation means generate supply voltages for a radiofrequency ion thrustor 77, a neutralizer 78, fuel infeed valves 79, regulators of the fuel pressure of the thrustor 77 and for a radiofrequency generator 80.

The voltage distribution means comprise a positive power supply line 1 and a negative power supply line 2; the positive line 1 is connected to the enabling means and can be selectively activated and deactivated by means of a power relay 3, which is pre-loaded by a pre-loading branch 4 which is parallel to the positive line 1. The power relay 3 comprises a pair of exciters 5 and 6 which are directly controlled through an appropriate conditioning network, not illustrated for the sake of simplicity in description, by the satellite computer 55; the exciter 5 closes a switch 7 and the exciter 6 opens it, thus supplying power or not to the device according to the invention.

The negative line 2 has a first resistor 8 at whose terminals a power supply telemetry can be acquired. At least one protection diode 9 is furthermore provided; said diode is arranged downstream of both the power relay 3 and the first resistor 8 and is reverse-biased.

The control logic means comprise an interface 10 which generates, starting from inputs arriving from the satellite computer 55, a plurality of activation and deactivation signals which control automatic activation means and power switching means. The interface 10 comprises optical isolation means which physically separate the power lines, in which power currents and voltages flow, from the data transmission lines.

The activation signals act respectively on a first relay 11, on a second relay 12 and on a bipolar transistor 13. The optical isolation means comprise optoisolators 14, both in the interface 10 and elsewhere, as will become apparent hereinafter, in the device according to the invention.

The conversion means comprise a first converter 15, a second converter 16, a third converter 17, a fourth converter 18 and a fifth converter 19.

The regulation means comprise a first push-pull type of inverter 20, a second push-pull type of inverter 21, a third push-pull type of inverter 22 and a fourth push-pull type of inverter 23 which are hereinafter termed inverters for the sake of simplicity in description.

The device according to the invention furthermore comprises a first rectifier-transformer assembly 24 and a second rectifier-transformer assembly 25, which are hereinafter termed rectifiers for the sake of simplicity in description.

The converters 15, 16, 17, 18 and 19, the inverters 20, 21, 22 and 23 and the rectifiers 24 and 25 are all arranged downstream of the diode or diodes 9.

The first converter 15 is supplied by the positive line 1 and by the negative line 2, both of which are filtered by means of a first filter 26 which is constituted by a first capacitor 27 and by a first inductor 28. The first converter 15 furthermore receives in input a sync signal 29 and supplies the first rectifier 24 through the first inverter 20.

The first rectifier 24 has an anode voltage on one of its output terminals, and a second ground-connected resistor 30 is arranged on another one of the output terminals of said rectifier 24; a first beam current telemetry 41 is acquired at the terminals of said second resistor. A first protection assembly against arcing is provided by the anode voltage terminal, this protection comprising a parallel arrangement of a second inductor 31 and of third resistor 32. A second protection assembly is coupled to the ground-connected terminal of the second resistor 30 and is constituted by a fourth resistor 68, a capacitor 69 and a pair of Zener diodes 70 and 71 which latter are mutually connected by means of their anode terminals.

The second inductor 31 of the first protection assembly is a toroidal inductor with a non-ferromagnetic core. Said second toroidal inductor 31 rejects the radiofrequency reflected by the thrustor 77, has high efficiency, does not dissipate power in normal operating conditions, and during the arcing in the thrustor 77 protects the device according to the invention and minimizes the propagation of electromagnetic noise toward the control logic means.

The second converter 16 is supplied by the positive line 1, which is tapped downstream of the first filter 26, and by the negative line 2, which is tapped upstream of said first filter 26. The second converter 16 furthermore receives in input the sync signal 29 and an error signal taken, by means of a first isolated feedback loop, from an output terminal 36 of the second rectifier 25 which carries the first acceleration voltage and is provided with a third protection assembly constituted by a fifth resistor 65.

Said first feedback loop comprises at least one differential amplifier 33, to the input of which there are applied the first acceleration voltage and a reference voltage 34 provided by the control logic means, and a squaring transformer circuit 35 which sends the signal from the amplifier 33 to the second converter 16.

The first acceleration voltage is present on the output terminal 36 of the second rectifier 25, which is supplied by the second converter 16 through the second inverter 21; a sixth resistor 37 is coupled to the other output terminal 36' of said second rectifier, and a second acceleration current telemetry 42 can be acquired or detected at the terminals of said sixth resistor, and one terminal of said resistor is connected upstream of the second resistor 30, constituting an adder node.

The third converter 17 is supplied by the positive line 1 and by the negative line 2, both of which are filtered by a second filter 38 constituted by a third inductor 39 and by a second capacitor 40.

The third converter 17 furthermore receives in input an automatic start signal supplied by the automatic activation means and generates, in addition to operating power for the third inverter 22, the sync signal 29 which is input to the first converter 15, the second converter 16 and the fourth converter 18.

The third inverter 22 generates operating power for the fifth converter 19 and the conversion means, a first supply voltage for the power switching means and an auxiliary supply voltage which is provided on the output terminal 47. The conversion means comprise a first linear regulator 43, a second linear regulator 44, a chopper regulator 45 and a series regulator 46.

The fourth converter 18 is supplied by the positive line 1 and by the negative line 2, both filtered by a third filter 48 constituted by a fourth inductor 49 and a third capacitor 50. The fourth converter 18 furthermore receives in input the sync signal 29 and an error signal which is tapped, through a second feedback loop, from a terminal arranged downstream of a transformer 52 which is supplied by the fourth inverter 23. Said fourth inverter is supplied by the fourth converter 18, and the transformer 51 produces alternating current for a heater of the cathode of the neutralizer 78.

Said second feedback loop has a differential amplifier 52 which receives in input a signal tapped downstream of the transformer 51 and a reference signal 53 sent by the control logic means in order to produce the error signal which controls the fourth converter 18.

The control logic means furthermore comprise a control logic unit 54 which receives in input commands from the satellite computer 55, transmits signals taken from the device according to the invention to said computer and furthermore generates a plurality of reference threshold levels for the various feedback loops and a plurality of activation and deactivation commands intended for the various circuits which compose the device, and receives telemetry control signals. Said signals and/or commands are transmitted toward and away from the components of the device through an optical isolation interface 56 which comprises a plurality of optoisolators 57. Pressure transducers 58 are furthermore provided for measuring instantaneous pressures of the supply of fuel to the thrustor 77 and for transmitting the pressures to the control logic unit 54.

The device furthermore comprises a beam current controller 59 which receives in input a signal which represents the beam current 41, an activation and deactivation signal 60 and a reference threshold 61 for the beam current 41, and generates a voltage threshold 62 which controls the fifth converter 19 to supply the radiofrequency generator 80. The fifth converter 19 furthermore receives the sync signal 29 in input.

The first linear regulator 43, supplied by the third inverter 22, provides on one of its output terminals a second acceleration voltage, which can be selected by a high-voltage switch 64 which can be controlled by the control logic unit 54, as an alternative to the first acceleration voltage present on the terminal 36; the other output terminal of said regulator 43 is connected downstream of the second resistor 30 at the second protection assembly. A fourth protection assembly, constituted by a Zener diode 66 and by a resistor 67, is arranged between the output terminals of the first linear regulator 43.

The second linear regulator 44, supplied by the third inverter 22, generates auxiliary voltages for the radiofrequency generator 80 on output terminals.

The chopper regulator 45, supplied by the third inverter 22, generates a plate voltage on one of its terminals to which a seventh ground-connected resistor 72 is connected; a third neutralization current telemetry is acquired at the terminals of said resistor, and the other terminal of said regulator 45 is connected to an output terminal of the transformer 51. The chopper regulator 45 regulates its own output voltage, current and power.

The series regulator 46, supplied by the third inverter 22, generates operating power at 54a for the control logic unit 54.

The power switching means, designated by the reference numeral 73, receive the first supply voltage from the third inverter 22 and a second supply voltage from the third converter 17. The first and second supply voltages have the same sign, and the second supply voltage has a greater amplitude than the first one. The power switching means 73 generate a plurality of opening and closing signals on their terminals 74a/74n, by means of the second supply voltage, and, on said terminals, by means of the first supply voltage, signals for open electric solenoid valves 79 for feeding fuel to the thrustor 77 upon activation commands 81 sent by the control logic unit 54.

The automatic activation means, designated by the reference numeral 75, receive in input a power-on signal which arrives from the interface 10 and generate an automatic power-on signal for the third converter 17 which, upon the occurrence of this signal, activates itself, supplying the third inverter 22 and generating the sync signal 29.

The chopper regulator 45 comprises a self-inductor 82 which has a primary stage 83 and a secondary stage 84 which are series-connected, and has an electronic switch 85 interposed between the primary stage 83 and the secondary stage 84 and a power diode 86 arranged in series to the secondary stage 84. The electronic switch 85, constituted for example by a MOSFET transistor, is controlled by modulator means.

A fourth filter 87, suitable to filter the operating power from the third inverter 22, is arranged upstream of the primary stage 83 and is constituted by a fourth capacitor 88, a fifth capacitor 89 and a fifth inductor 90.

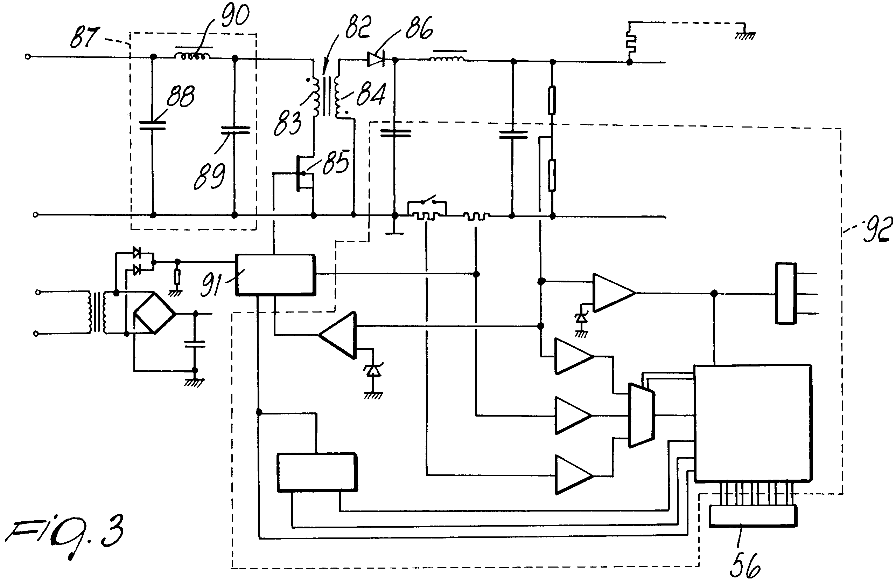

The modulator means comprise a pulse amplitude modulator 91 which receives, in input, a sync signal obtained from the auxiliary supply voltage by means of a known sync extraction circuit shown in figure 3, and activation signals which arrive from the control logic unit 54 through the interface 56 and are decoded by a logic network 92.

The logic network 92 acquires signals downstream of the secondary stage 84 and sends them to the control logic unit 54 and to other components of the device according to the invention.

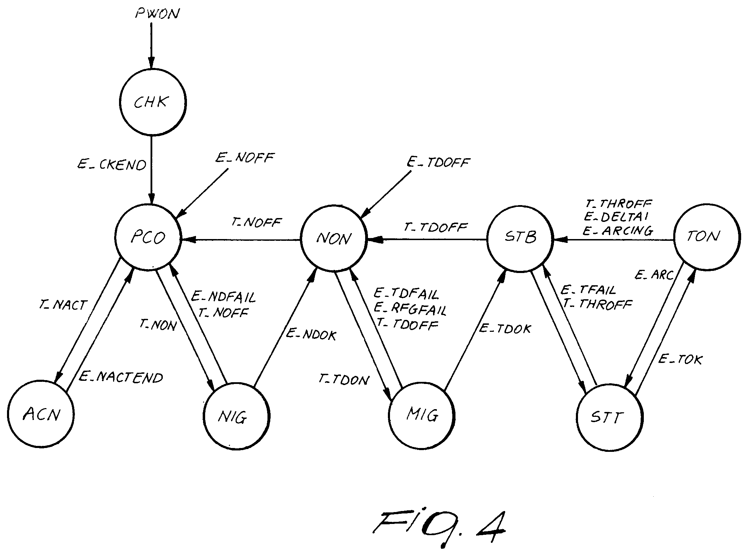

The control process, illustrated in figure 4, performs the procedures for the operation of the device, its monitoring and control, executes remote controls transmitted either from ground-based control stations or from the satellite computer 55, and transmits the acquired telemetries.

This process causes the device to step through the states shown in figure 4, and obviates abnormal conditions both during permanence in one state and during transition between states.

The states illustrated in the figure have the following meanings:
- CHK: initial checkout;
- PCO: device power-on;
- ACN: neutralizer activation;
- NIG: neutralizer ignition;
- NON: neutralizer power-on;
- MIG: thrustor 77 discharge ignition;
- STB: standby status (thrustor 77 discharge activated);
- STT: thrust start;
- TON: thrust.

The signals indicated on the branches which connect the various states arrive from the data processing network or represent operation events and cause change from one state to the other. The events are detected by the control logic unit 54 on the basis of analog or digital data which arrive from the components of the device.

Operation of the control logic unit 54 provides for the following actions: control of the device, performed upon the activation of the power supply; data processing management, i.e. reception and execution of remote controls, acquisition and transmission of telemetries; device flow management, i.e. control of the pressure on the supply and control of the pressure of the supply of the neutralizer; thrust management and radiofrequency generation unit management; neutralizer activation, ignition and fault monitoring; thrust starting, monitoring of arcing, monitoring of current imbalances and shutdown of the thrustor 77.

The process furthermore provides for the detecting of abnormal events due either to the intrinsic constitution of the electric thrustor or to operating ambient noise. The following monitoring actions fall within the first group: end of neutraliser discharge, end of the discharge of the thrustor 77, arcing detection, current imbalance. Controls for the protection of the device against operating ambient noise are: read-only memory (ROM) checksums, random-access memory (RAM) check and dual alarm circuits.

In order to avoid problems in state transitions, the following measures have been taken: filtering of input data, shielding of output commands, triplication of status variables, data consistency checking, majority-voting method, essential data saving and status recovery actions.

Practical tests have shown that the device achieves the intended aim and objects, constituting a control device which is capable of controlling and supplying power to a radiofrequency ion thrustor 77 of a satellite which is capable of maintaining a thrust comprised between 3 millinewtons and 16.5 millinewtons, reducing, with respect to the known art, both the dimensions and weight of said device, in addition to increasing safety and improving checks for any problems which can occur in said device.

The invention thus conceived is susceptible to numerous modifications and variations, all of which are within the scope of the inventive concept. All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Power supply and control device particularly for radiofrequency ion thrustors, characterized in that it comprises enabling means and electric power distribution means selectively electrically connected to satellite batteries and photovoltaic panels by voltage preregulators, said enabling means being connected to a satellite computer to which control logic means are moreover connected, said distribution means supplying conversion means and regulation means controlled by said control logic means, said conversion means and said regulation means generating operating voltages for a radiofrequency ion thrustor, a neutralizer, fuel infeed valves and fuel pressure regulators for said thrustor and for a RF generator.

2. A device according to claim 1, characterized in that said distribution means comprise a positive supply line and a negative supply line, said positive supply line being connected to said enabling means and being selectively activatable and deactivatable by a power relay, said power relay being pre-loaded by a pre-loading branch parallel to said positive supply line, said negative supply line being provided with a first resistor at whose terminals a supply current telemetry can be acquired, at least a reversely biased protection diode being moreover provided, said diode being arranged downstream both of said power relay and said first resistor.

3. A device according to the preceding claims, characterized in that said control logic means comprise an interface for generating, from inputs arriving from said satellite computer, a plurality of activation and deactivation signals for controlling automatic activation means and power switching means, said interface comprising optical isolation means physically separating power lines from data transmission lines.

4. A device according to one or more of the preceding claims, characterized in that said conversion means comprise a first converter supplying said regulation means to generate an anode voltage, a second converter supplying said regulation means to generate a first acceleration voltage, a third converter supplying said regulation means to generate auxiliary voltages and preregulated voltages for conversion means arranged downstream of said regulation means and for a fifth converter generating a supply voltage for said radiofrequency generator, a fourth converter supplying said regulation means and a transformer which are cascade-coupled and are suitable to generate a voltage for a heater of the neutralization cathode of said thrustor.

5. A device according to one or more of the preceding claims, characterized in that said regulation means comprise a first push-pull inverter arranged downstream of said first converter, a second push-pull inverter arranged downstream of said second converter, a third push-pull inverter arranged downstream of said third converter and upstream of said fifth converter, and a fifth push-pull inverter arranged downstream of said fourth converter.

6. A device according to one or more of the preceding claims, characterized in that it comprises a first rectifier-transformer assembly arranged downstream of said first push-pull inverter and a second rectifier-transformer arranged downstream of said second push-pull inverter.

7. A device according to one or more of the preceding claims, characterized in that said first converter is supplied by said positive supply line and by said negative supply line, both of which are filtered by a first filter constituted by a first capacitor and a first inductor, said first converter receiving in input a sync signal and supplying said first rectifier-transformer assembly through said first push-pull inverter, said first rectifier-transformer assembly having said anode voltage on one of its output terminals, a second ground-connected resistor being arranged on another one of the output terminals of said rectifier-transformer assembly, a first beam current telemetry being acquired at the terminals of said second resistor, a first protection assembly against arcing being coupled to said terminal having said anode voltage, said protection assembly being constituted by a third resistor and a second inductor arranged in parallel, a second protection assembly being coupled to a ground-connected terminal of said second resistor, said second protection assembly being constituted by a fourth resistor, a capacitor and a pair of Zener diodes mutually connected by their anode terminals.

8. A device according to one or more of the preceding claims, characterized in that said second inductor of said first protection assembly is a toroidal inductor with a non-ferromagnetic core.

9. A device according to one or more of the preceding claims, characterized in that said second converter is supplied by said positive supply line, tapped downstream of said first filter, and by said negative supply line, tapped upstream of of said first filter, said second converter receiving in input said sync signal and an error signal which is acquired, by means of a first isolated feedback loop, from an output terminal of said second rectifier-transformer assembly which carries said first acceleration voltage and is provided with a third protection assembly constituted by a fifth resistor, said second rectifier-transformer assembly, supplied by said second converter through said second push-pull inverter, having said acceleration voltage on one of its output terminals, a sixth resistor being arranged on another one of its output terminals, a second acceleration current telemetry being available at the terminals of said sixth resistor, a terminal of said sixth resistor being connected upstream of said second resistor, constituting an adder node.

10. A device according to one or more of the preceding claims, characterized in that said third converter is supplied by said positive supply line and by said negative supply line, both of which are filtered by a second filter constituted by a third inductor and a second capacitor, said third converter receiving in input an automatic start signal from said automatic activation means and being suitable to generate, in addition to operative power for said third push-pull inverter, said sync signal which is input to said first, second and fourth converters.

11. A device according to one or more of the preceding claims, characterized in that said third push-pull inverter is suitable to generate operating power for said fifth converter and said conversion means, a first supply voltage for said power switching means and an auxiliary supply voltage, said conversion means comprising a first linear regulator, a second linear regulator, a chopper regulator and a series regulator.

12. A device according to one or more of the preceding claims, characterized in that said fourth converter is supplied by said positive supply line and by said negative supply line, both of which are filtered by means of a third filter constituted by a fourth inductor and a third capacitor, said fourth converter receiving in input said sync signal and an error signal taken, through a second isolated feedback loop, from a terminal arranged downstream of said transformer supplied by said fourth push-pull inverter, which is supplied by a fourth converter, said transformer producing alternating current for a heater of the cathode of said neutralizer.

13. A device according to one or more of the preceding claims, characterized in that said control logic unit is suitable to receive in input commands arriving from said satellite computer and to transmit thereto signals acquired from said device, to generate a plurality of reference threshold levels for said feedback loops, a plurality of activation and deactivation commands intended for the various circuits which compose said device and to receive telemetry control signals, said signals being transmitted toward and away from said components of said device through an optical isolation interface, pressure transducers being provided suitable to measure instantaneous pressures for the supply of fuel to said thrustor and to transmit said pressures to said control logic unit.

14. A device according to one or more of the preceding claims, characterized in that it comprises a beam current controller which receives in input a signal which represents said beam current, an activation and deactivation signal and a beam current reference threshold, and is suitable to generate a voltage threshold which is input to said fifth converter supplying said RF generator.

15. A device according to one or more of the preceding claims, characterized in that said first linear regulator, supplied by said third push-pull inverter, provides a second acceleration voltage on one of its output terminals, said voltage being selectable by a high-voltage switch controlled by said control logic means, the other output terminal of said regulator being connected downstream of said second resistor, a fourth protection assembly, constituted by a Zener diode and by a resistor, being arranged between said output terminals.

16. A device according to one or more of the preceding claims, characterized in that said second linear regulator, supplied by said third push-pull inverter, generates, on its output terminals, auxiliary voltages for said RF generator.

17. A device according to one or more of the preceding claims, characterized in that said chopper regulator, supplied by said third push-pull inverter, generates a plate voltage on one of its terminals, to which a seventh ground-connected resistor is connected, a third neutralization current telemetry being acquired at the terminals of said resistor, another terminal of said regulator being connected to an output terminal of said transformer and being suitable to regulate its own voltage, current and power in output.

18. A device according to one or more of the preceding claims, characterized in that said series regulator, supplied by said third push-pull inverter, generates an operating power for said control logic unit.

19. A device according to one or more of the preceding claims, characterized in that said power switching means receive said first supply voltage from said third push-pull inverter and a second supply voltage from said third converter, said first supply and said second supply having the same sign, said second supply having a greater amplitude than said first supply, said power switching means generating a plurality of opening and closing signals by said second supply voltage, and signals for keeping open, by said first supply voltage, electric solenoid valves for feeding fuel to said thrustor.

20. A device according to one or more of the preceding claims, characterized in that said chopper regulator comprises a mutual inductor which has a primary stage and a secondary stage which are series-connected and with an electronic switch interposed between said primary stage and said secondary stage and a power diode arranged in series to said secondary stage, said electronic switch being controlled by modulator means.

21. A device according to one or more of the preceding claims, characterized in that a fourth filter is arranged upstream of said primary stage and being constituted by a fourth capacitor, a fifth inductor and a sixth inductor, said filter being suitable to filter the power supply from said third push-pull inverter.

22. A device according to one or more of the preceding claims, characterized in that said modulator means comprise a pulse amplitude modulator which receives, in input, a sync signal obtained from said auxiliary supply voltage and activation signals from said control logic unit and decoded by a logic network.

23. A device according to one or more of the preceding claims, characterized in that said logic network is suitable to acquire signals downstream of said secondary stage to send them to said control logic unit.
